# EUROPEAN PATENT APPLICATION

(11) **EP 3 823 314 A1**
(43) Date of publication of application: **19.05.2021**
(21) Application number: 20166022.2
(22) Date of filing: 26.03.2020
(51) Int. Cl.: H04R 29/00, H04R 5/02, G06F 1/16, H04M 1/02, H04M 1/03, H04N 5/64

(54) **USER EQUIPMENT AND METHOD FOR OUTPUTTING AUDIO**

(30) Priority: 15.11.2019 CN 201911121654
(71) Applicant: Beijing Xiaomi Mobile Software Co., Ltd., Beijing 100085 (CN)
(72) Inventor: LI, Xiaoshuang, Beijing, 100085 (CN); LU, Shiwei, Beijing, 100085 (CN); LV, Zhengrong, Beijing, 100085 (CN); XU, Zhaoqian, Beijing, 100085 (CN)
(74) Representative: Gevers Patents

(57) **Abstract**

The UE includes a housing (101), an audio output module (102), and a drive module (103) connected to the audio output module (102). The drive module (103) drives the audio output module (102) to move along a straight line between a first location and a second location. The first location is inside the housing (101). The second location is outside the housing (101). When the audio output module (102) is in an audio output state, the drive module (103) drives the audio output module (102) to move along the straight line to the second location. When the audio output module (102) quits the audio output state, the drive module (103) drives the audio output module (102) to move along the straight line to the first location.

## Description

### TECHNICAL FIELD

The present disclosure relates to the field of audio technology, and in particular to User Equipment (UE), a method and device for outputting audio, a computer program, and a recording medium.

### BACKGROUND

With continuous development of UE and advance of science and technology, UE tends to be smart and of diversified functions. Design of a functional module in existing UE may no longer meet a demand of a user. For example, a speaker in a conventional TV set is fixedly arranged in a housing of the TV set, which may fail to meet the demand of a user.

### SUMMARY

Embodiments herein provide User Equipment (UE), a method and device for outputting audio, a computer program, and a recording medium.

According to a first aspect herein, User Equipment (UE) includes at least a housing, an audio output module, and a drive module connected to the audio output module.

The drive module is adapted to driving the audio output module to move along a straight line between a first location and a second location. The first location is located inside the housing. The second location is located outside the housing.

The drive module is adapted to, in response to the audio output module being in an audio output state, driving the audio output module to move along the straight line to the second location.

The drive module is adapted to, in response to the audio output module quitting the audio output state, driving the audio output module to move along the straight line to the first location.

With embodiments herein, an audio output module is driven to move along a straight line from inside the housing to outside the housing only when the audio output module is in the audio output state. In this way, compared to hiding an audio output module inside a housing, the location of the audio output module is adjusted according to the audio output state of the audio output module, such that the audio output module appears outside the housing when outputting an audio signal, reducing blockage of audio output, thereby improving the result of audio output. When no audio signal is to be output, the audio output module is stored inside the housing, protecting the audio output module from possible damage due to being left outside the housing of the UE, as well as reducing space occupied by the UE. The audio output module may move along a straight line between inside the housing and outside the housing, implementing a smarter design of the audio output module, improving user experience.

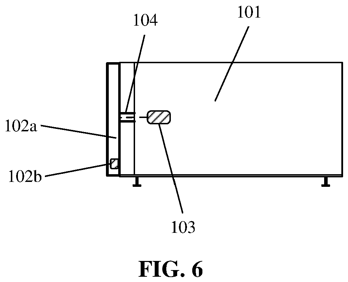

FIG. 6 is a diagram of UE according to an exemplary embodiment. According to an embodiment herein, the UE may further include a guide rail fixedly installed on the housing.

The audio output module may include a mobile body and an audio output component installed on the mobile body.

The mobile body may be arranged on the guide rail.

The drive module may be connected to the mobile body. The drive module may be adapted to driving the mobile body to move along the straight line between the first location and the second location in a direction in which the guide rail is arranged.

According to an embodiment herein, the mobile body may include a first end and a second end arranged opposite the first end.

The audio output component may include a first output sub-component and a second output sub-component.

The first output sub-component may be arranged at the first end and / or the second end. The first output sub-component may be adapted to outputting an audio signal of a frequency less than a threshold.

The second output sub-component may be arranged between the first end and the second end. The second output sub-component may be adapted to outputting an audio signal of a frequency greater than the threshold.

According to an embodiment herein, the mobile body may include a first end and a second end arranged opposite the first end.

The audio output component may include a third output sub-component and a fourth output sub-component.

The third output sub-component may be arranged at the first end and / or the second end.

The fourth output sub-component may be arranged between the first end and the second end. The third output sub-component may be greater than the fourth output sub-component in terms of size. The third output sub-component may be greater than the fourth output sub-component in terms of maximum output volume.

According to an embodiment herein, the mobile body may include a first region and a second region. The audio output component may be located in the first region.

When the mobile body moves along the straight line to the first location, both the first region and the second region may be located inside the housing.

When the mobile body moves along the straight line to the second location, at least the first region may be located outside the housing.

According to an embodiment herein, the housing may further include a first surface and a second surface neighboring the first surface.

The UE may further include a screen.

The screen may be located on the first surface.

The drive module may be adapted to driving the audio output module to move along a straight line in a direction in which the second surface is arranged.

According to an embodiment herein, the housing may further include a first surface and two second surfaces neighboring the first surface.

The UE may further include a screen.

The screen may be located on the first surface.

The audio output module may include two audio output modules corresponding respectively to the two second surfaces.

The drive module may be adapted to driving each of the two audio output modules to move along a straight line in a direction in which a second surface corresponding to the each of the two audio output modules is arranged.

According to a second aspect herein, a method for outputting audio includes:
detecting an audio output state of an audio output module in User Equipment (UE);
in response to the audio output module being in the audio output state, driving, via a drive module, the audio output module to move along a straight line from a first location inside a housing to a second location outside the housing;
outputting, via the audio output module at the second location, an audio signal; and
in response to the audio output module quitting the audio output state, driving, via the drive module, the audio output module to move along the straight line from the second location to the first location.

The advantages and technical effects of the method herein correspond to those of the UE presented above.

According to an embodiment herein, the driving, via the drive module, the audio output module to move along the straight line from the first location inside the housing to the second location outside the housing may include:
driving, via the drive module, a mobile body of the audio output module to move along the straight line from the first location inside the housing to the second location outside the housing in a direction in which a guide rail fixed on the housing is arranged.

According to an embodiment herein, the driving, via the drive module, the audio output module to move along the straight line from the second location to the first location may include:
driving, via the drive module, a mobile body of the audio output module to move along the straight line from the second location to the first location in a direction in which a guide rail fixed on the housing is arranged.

According to an aspect herein, a device for outputting audio includes a processor and memory.

The memory is adapted to storing an instruction executable by the processor.

The processor is adapted to implementing the method.

The advantages and technical effects of the device herein correspond to those of the method presented above.

In one particular embodiment, the steps of the method are determined by computer program instructions.

Consequently, according to an aspect herein, the disclosure is further directed to a computer program for executing the steps of the method, when said program is executed by a computer.

This program can use any programming language and take the form of source code, object code or a code intermediate between source code and object code, such as a partially compiled form, or any other desirable form.

According to an aspect herein, a computer-readable storage or recording medium has recorded thereon a computer program including executable instructions of a computer program as described above that, when executed by a processor, causes the processor to implement the method.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The above general description and the detailed description below are but exemplary and explanatory, and do not limit the present disclosure.

### BRIEF DESCRIPTION OF THE ACCOMPANYING DRAWINGS

Drawings here are incorporated in and constitute part of the present disclosure, illustrate embodiments according to the present disclosure, and together with the present disclosure, serve to explain the principle of the present disclosure.
FIG. 1 is a diagram of UE according to an exemplary embodiment.
FIG. 2 is a diagram of a drive module 103 in UE according to an exemplary embodiment.
FIG. 3 is a diagram of UE in related art.
FIG. 4 is a diagram of UE according to an exemplary embodiment.
FIG. 5 is a diagram of UE according to an exemplary embodiment.
FIG. 6 is a diagram of UE according to an exemplary embodiment.
FIG. 7 is a diagram of UE according to an exemplary embodiment.
FIG. 8 is a diagram of UE according to an exemplary embodiment.
FIG. 9 is a diagram of UE according to an exemplary embodiment.
FIG. 10 is an diagram of UE according to an exemplary embodiment.
FIG. 11 is a diagram of a drive module 103 in UE according to an exemplary embodiment.
FIG. 12 is a diagram of a drive module 103 in UE according to an exemplary embodiment.
FIG. 13 is a flowchart of a method for outputting audio according to an exemplary embodiment.
FIG. 14 is a block diagram of UE according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the present disclosure. Rather, they are mere examples of the device and method in accordance with certain aspects of the present disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the present disclosure. Rather, they are merely examples of the apparatus and method in accordance with certain aspects herein as recited in the accompanying claims.

A term used in an embodiment herein is merely for describing the embodiment instead of limiting the present disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

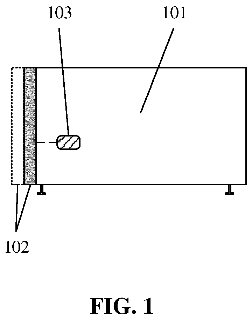

FIG. 1 is a diagram of UE according to an exemplary embodiment. As shown in FIG. 1, the UE includes at least a housing 101, an audio output module 102, and a drive module 103 connected to the audio output module 102.

The drive module 103 is adapted to driving the audio output module 102 to move along a straight line between a first location and a second location. The first location is located inside the housing 101. The second location is located outside the housing 101.

The drive module 103 is adapted to driving the audio output module 102 to move along the straight line to the second location when the audio output module 102 is in an audio output state.

The drive module 103 is adapted to driving the audio output module 102 to move along the straight line to the first location when the audio output module 102 quits the audio output state.

According to an embodiment herein, UE may include, but is not limited to, mobile equipment and fixed equipment. Mobile equipment may include, but is not limited to, a laptop or a tablet computer. Fixed equipment may include, but is not limited to, a TV set or a desktop computer.

A shape of the housing 101 may be arranged according to a demand of a user. For example, a shape of the housing 101 of UE such as a TV set may be arranged to be rectangular, to which an embodiment herein is not limited.

The audio output module 102 is adapted to outputting an audio signal, so that a person may hear a sound such as music, a conversation between characters in a video, etc. The audio output module 102 is connected to the drive module 103. The audio output module 102 may move along the straight line between the first location and the second location. A trajectory of the motion along the straight line between different locations may be straight.

The motion along the straight line between the first location and the second location may include a motion along the straight line from the first location to the second location or a motion along the straight line from the second location to the first location. For example, to output an audio signal, the audio output module 102 may be driven to move outside the housing 101 along the straight line, i.e., to move along the straight line to the second location. When no audio is to be output, the audio output module 102 may be driven to move inside the housing 101 along the straight line, i.e., to move along the straight line to the first location.

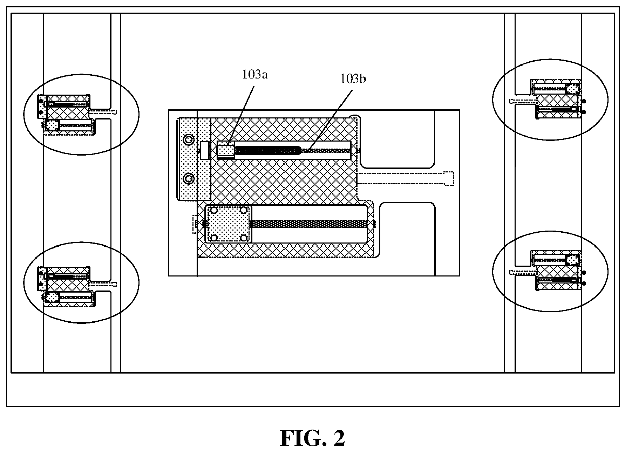

According to some embodiments, as shown in FIG. 2, the drive module 103 may include a motor 103a and a motion component 103b connected to the motor 103a. Under the action of the motor 103a, the motion component 103b may drive the audio output module 102 to move along the straight line between the first location and the second location.

The motor 103a may generate rotational forces in opposite directions. The motor 103a may include, but is not limited to, a synchronous motor 103a, an asynchronous motor 103a, etc.

Under the action of the rotational forces generated by the motor 103a, the motion component 103b may move in opposite directions, thereby driving the audio output module 102 to move along the straight line between the first location and the second location. For example, the motion component 103b rotating in a first direction may drive the audio output module 102 to move along the straight line from the first location to the second location. The motion component 103b rotating in a second direction may drive the audio output module 102 to move along the straight line from the second location to the first location. The first direction may be opposite the second direction.

According to an embodiment herein, the audio output module 102 in an audio output state may move along a straight line from inside the housing 101 to outside the housing 101. The audio output module 102 may output an audio signal. When quitting the audio output state, the audio output module 102 may move along the straight line from outside the housing 101 to inside the housing 101. The audio output module 102 may output no audio signal.

The audio output state of the audio output module 102 may represent that the audio output module 102 is to output an audio signal. The audio output module 102 may quit the audio output state, which may represent that the audio output module 102 has no audio signal to output at the moment. In this case, the UE may be performing, on a screen of the UE, an operation that requires no sound output, such as browsing information on the UE or writing information on the UE, to which an embodiment herein is not limited.

Exemplarily, it may be determined whether the audio output module 102 is in the audio output state through an on / off state of the UE. For example, the UE may be a TV set. If the TV set is in the on state, it may indicate that the audio output module 102 is to output an audio signal. Then, it may be determined that the audio output module 102 is in the audio output state. If the TV set is in the off state, it may indicate that the audio output module 102 has no audio signal to output. Then, it may be determined that the audio output module 102 is no longer in the audio output state.

According to an embodiment, it may be detected whether the audio output module 102 is in the audio output state using a detection module, to which an embodiment herein is not limited. The detection module may include, but is not limited to, a sound sensor.

For example, the UE may be a TV set. The TV set may be in the on state. A user may reduce the volume to zero for the moment. Then, it may also indicate that the audio output module 102 is not in the audio output state for the moment.

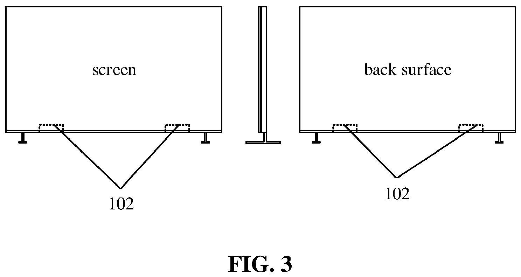

FIG. 3 is a diagram of UE in related art. As shown in FIG. 3, the UE may include a screen. A surface where the screen is located may be a front surface of the UE. A surface arranged opposite the surface where the screen is located may be a back surface of the UE. As may be seen from the front surface and the back surface of the UE, an audio output module 102 in related art is hidden inside the housing 101. In addition, the audio output module 102 is fixed inside the housing 101.

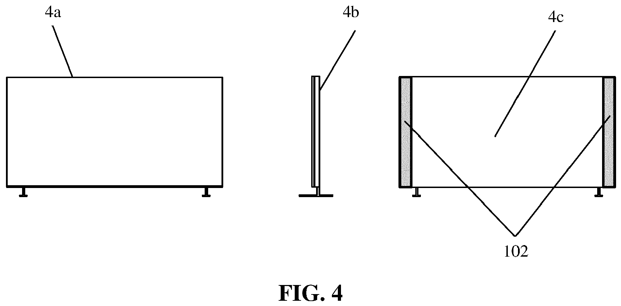

FIG. 4 is a diagram of UE according to an exemplary embodiment. As shown in FIG. 4, the UE may include a screen. A surface where the screen is located may be a front surface of the UE. A surface arranged opposite the surface where the screen is located may be a back surface of the UE. 4a is a front view of the UE. 4b is a side view of the UE. 4c is a back view of the UE. As may be seen from the back view, two audio output modules 102 may be arranged in the UE. When the audio output modules 102 quits the audio output state, the UE may drive, through the drive module 103, the audio output modules 102 to move along a straight line to a first location inside the housing 101. In this case, the audio output modules 102 may be hidden inside the housing 101 and output no audio signal.

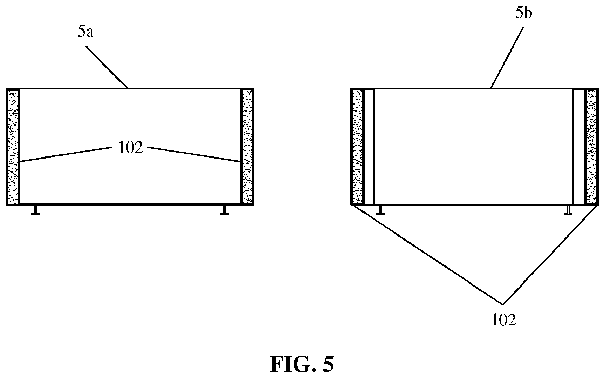

FIG. 5 is a diagram of UE according to an exemplary embodiment. As shown in FIG. 5, the UE may include a screen. A surface where the screen is located may be a front surface of the UE. A surface arranged opposite the surface where the screen is located may be a back surface of the UE. 5a is a front view of the UE. 5b is a back view of the UE. Two audio output modules 102 may be arranged in the UE. As may be seen from the front view and the back view, when the audio output modules 102 are in the audio output state, the UE may drive, through the drive module 103, the audio output modules 102 to move along a straight line to a second location outside the housing 101. The two audio output modules 102 inside the UE may appear from both sides. In this case, the audio output modules 102 may output audio signals.

Thus, with embodiments herein, an audio output module 102 is driven to move along a straight line from inside the housing 101 to outside the housing 101 only when the audio output module 102 is in the audio output state. Blockage of audio output may be reduced, thereby improving the result of audio output. When no audio signal is to be output, the audio output module 102 is stored inside the housing 101, protecting the audio output module from possible damage due to being left outside the housing 101 of the UE, as well as reducing space occupied by the UE. The audio output module 102 may move along a straight line between inside the housing 101 and outside the housing 101, implementing a smarter design of the audio output module 102, improving user experience.

According to an embodiment, as shown in FIG. 6, the UE may further include a guide rail 104 fixedly installed on the housing 101.

The audio output module 102 may include a mobile body 102a and an audio output component 102b installed on the mobile body102a.

The mobile body 102a may be arranged on the guide rail 104.

The drive module 103 may be connected to the mobile body 102a. The drive module 103 may be adapted to driving the mobile body 102a to move along the straight line between the first location and the second location in a direction in which the guide rail 104 is arranged.

According to an embodiment herein, the mobile body 102a may be movably connected to the housing 101. The audio output module 102 may move along a straight line in the direction in which the guide rail 104 is arranged with respect to the housing 101. When the audio output module 102 is in the audio output state, the drive module 103 may drive the mobile body 102a to move along the straight line from the first location to the second location in the direction in which the guide rail 104 is arranged. When the audio output module 102 quits the audio output state, the drive module 103 may drive the mobile body 102a to move along the straight line from the second location to the first location in the direction in which the guide rail 104 is arranged.

The guide rail 104 may be arranged as a straight guide rail. The mobile body 102a may move along a straight line on the guide rail 104. A location of the guide rail 104 with respect to the drive module 103 may be arranged as needed. For example, the drive module 103 may be arranged between two guide rails 104. Alternatively, a guide rail 104 may be arranged coplanar with the drive module 103. Accordingly, the mobile body 102a is driven by a driving component to move on the guide rail 104, avoiding instability such as shaking of the audio output module 102 while moving along the straight line on the guide rail 104.

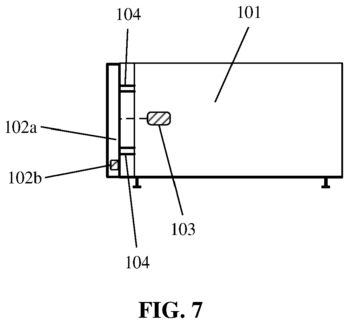

FIG. 7 is a diagram of UE according to an exemplary embodiment. According to an embodiment, as shown in FIG. 7, there may be two guide rails 104. The drive module 103 may be arranged between the two guide rails 104.

According to an embodiment herein, two guide rails 104 arranged on the housing 101 may be parallel to each other. The audio output module 102 may move along a straight line on both guide rails 104. The audio output module 102 may be relatively large. The audio output module 102 may be driven by the drive module 103 to move along a straight line on one guide rail 104. In this case, the audio output module 102 may be unstable, for example, may shake, during the motion due to arrangement of the locations of the drive module 103 and of the guide rail 104. For example, the guide rail 104 may be arranged at a location A of the audio output module 102. A driving force of the drive module 103 may be applied to the audio output module 102 at a location B. The location A and the location B may be at two opposite ends of the audio output module 102. In this case, when the audio output module 102 is driven to move, the audio output module 102 may tilt toward the location B.

Accordingly, two guide rails 104 may be arranged on the housing 101. The drive module 103 may be arranged between the two guide rails 104. Thus, when driven by the drive module 103, the audio output module 102 may move on the two guide rails 104 along a straight line stably, avoiding instability such as shaking of the audio output module 102 while moving along the straight line.

According to an embodiment, the mobile body 102a may include a first end and a second end arranged opposite the first end.

The audio output component may include a first output sub-component and a second output sub-component.

The first output sub-component may be arranged at the first end and / or the second end. The first output sub-component may be adapted to outputting an audio signal of a frequency less than a threshold.

The second output sub-component may be arranged between the first end and the second end. The second output sub-component may be adapted to outputting an audio signal of a frequency greater than the threshold.

The first output sub-component may be adapted to outputting an audio signal of a frequency less than a threshold. The second output sub-component may be adapted to outputting an audio signal of a frequency greater than the threshold. That is, the first output sub-component may be adapted to outputting a low-pitch part of an audio signal. The second output sub-component may be adapted to outputting a high-pitch part of the audio signal.

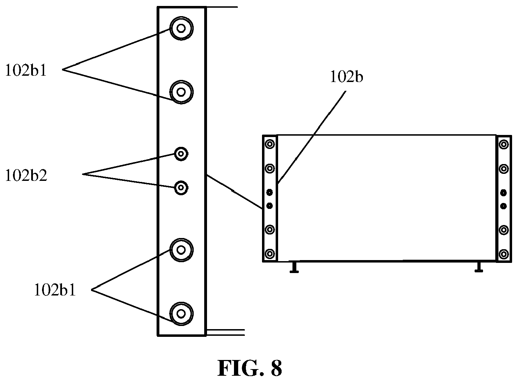

FIG. 8 is a diagram of UE according to an exemplary embodiment. According to an embodiment, as shown in FIG. 8, the mobile body 102a may include a first end and a second end arranged opposite the first end.

The audio output component 102b may further include a third output sub-component 102b1 and a fourth output sub-component 102b2.

The third output sub-component 102b1 may be arranged at the first end and / or the second end.

The fourth output sub-component 102b2 may be arranged between the first end and the second end. The third output sub-component 102b1 may be greater than the fourth output sub-component 102b2 in terms of size. The third output sub-component 102b1 may be greater than the fourth output sub-component 102b2 in terms of maximum output volume.

According to an embodiment herein, the third output sub-component 102b1 and the fourth output sub-component 102b2 may differ in size. The third output sub-component 102b1 may be greater than the fourth output sub-component 102b2 in terms of maximum output volume. Therefore, the third output sub-component 102b1 may be arranged at either end or both ends of the mobile body 102a. The fourth output sub-component 102b2 may be arranged between the two ends of the mobile body 102a. With alternate arrangement of the third output sub-component 102b1 and the fourth output sub-component 102b2, a higher degree of superimposition of peaks and of troughs of sound signals within one frequency band in an audio signal is implemented, thereby outputting an audio signal of a better result.

According to an embodiment, the mobile body 102a may include a first region and a second region. The audio output component may be located in the first region.

When the mobile body 102a moves along the straight line to the first location, both the first region and the second region may be located inside the housing 101.

When the mobile body 102a moves along the straight line to the second location, at least the first region may be located outside the housing 101.

According to an embodiment herein, when the audio output module 102 quits the audio output state, the mobile body 102a may move along the straight line to the first location. The mobile body 102a may be located entirely inside the housing 101. When the audio output module 102 is in the audio output state, the mobile body 102a may move along the straight line to the second location. In this case, the mobile body 102a is not necessarily fully exposed outside the housing 101, however the first region where the audio output component is arranged may be exposed outside the housing 101. A region other than the first region may be hidden inside the housing 101.

That is, when no audio signal is to be output, the mobile body 102a may move inside the housing 101 along a straight line. When an audio signal is to be output, the first region of the mobile body 102a where the audio output component is arranged may move outside the housing 101 along a straight line.

According to an embodiment herein, when the mobile body 102a is located inside the housing 101, it may be arranged such that a distance between the first region and the second location is less than a distance between the second region and the second location. Thus, while the mobile body 102a moves along a straight line from the first location to the second location, the first region may be the first to appear outside the housing 101, reducing the amount of time required for the audio output component arranged in the first region to move outside the housing 101 along a straight line, thereby outputting an audio signal in time.

According to an embodiment, the housing 101 may further include a first surface and a second surface neighboring the first surface.

The UE may further include a screen.

The screen may be located on the first surface.

The drive module 103 may be adapted to driving the audio output module 102 to move along a straight line in a direction in which the second surface is arranged.

According to an embodiment herein, there may be multiple second surfaces neighboring the first surface. The drive module 103 according to an embodiment herein may drive the audio output module 102 to move along a straight line in a direction in which any second surface neighboring the first surface is arranged.

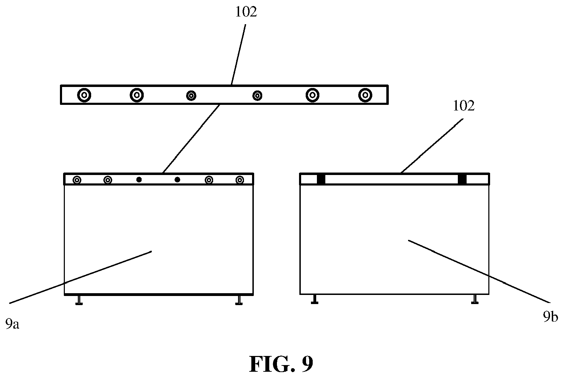

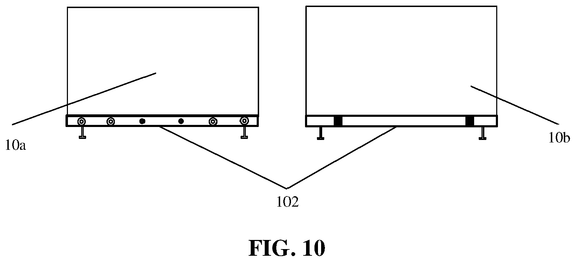

FIG. 9 and FIG. 10 are diagrams of UE according to exemplary embodiments. As shown in FIG. 9 and FIG. 10, the UE may include a screen. A first surface where the screen is located may be a front surface of the UE. A surface arranged opposite the surface where the screen is located may be a back surface of the UE. A second surface may be any of four surfaces neighboring the first surface where the screen is located. The audio output module 102 may move outside the housing 101 along a straight line in a direction in which any of the four second surfaces is arranged.

In FIG. 9, 9a is a front view of the UE. 9b is a back view of the UE. As may be seen from the front view and the back view of the UE, the audio output module 102 may move to the outside of the housing 101 along a straight line in a direction in which one second surface is arranged.

In FIG. 10, 10a is a front view of the UE. 10b is a back view of the UE. As may be seen from the front view and the back view of the UE, the audio output module 102 may move to the outside of the housing 101 along a straight line in a direction in which another second surface is arranged.

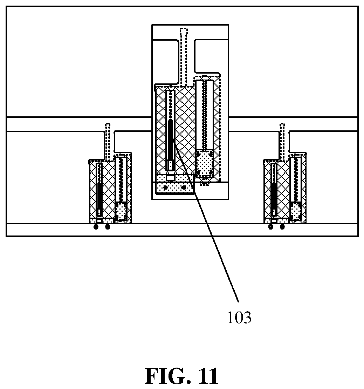

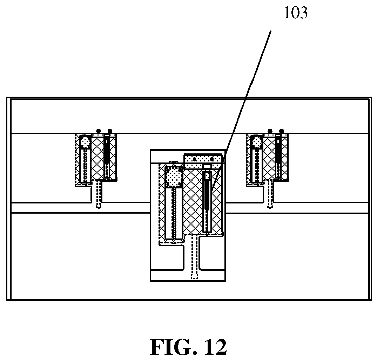

FIG. 11 and FIG. 12 are diagrams of a drive module 103 in UE according to exemplary embodiments. Moreover, when a second surface is arranged in a direction as shown in FIG. 9, the drive module 103 may be arranged in a direction as shown in FIG. 11. When a second surface is arranged in a direction as shown in FIG. 10, the drive module 103 may be arranged in a direction as shown in FIG. 12.

With embodiments herein, the audio output module 102 may move outside the housing 101 along a straight line from different surfaces inside the housing 101, in a flexible mode, improving user experience.

According to an embodiment, the housing 101 may further include a first surface and two second surfaces neighboring the first surface.

The UE may further include a screen. The screen may be located on the first surface.

The audio output module 102 may include two audio output modules 102 corresponding respectively to the two second surfaces.

The drive module 103 may be adapted to driving each of the two audio output modules 102 to move along a straight line in a direction in which a second surface corresponding to the each of the two audio output modules 102 is arranged.

According to an embodiment herein, multiple second surfaces may neighbor the first surface. The drive module 103 according to an embodiment herein may drive the audio output module 102 to move along a straight line in directions in which any two second surfaces neighboring the first surface are respectively arranged.

As shown in FIG. 5, the two second surfaces may be any two of four surfaces neighboring the first surface. The two second surfaces may be arranged opposite each other. Each of two audio output modules 102 may be located on a corresponding second surface corresponding to the each of the two audio output modules 102, and may be driven simultaneously by the drive module 103 to move outside the housing 101 along a straight line in a direction in which the corresponding second surface is arranged.

Accordingly, two audio output modules 102 are arranged on the UE. When the audio output modules 102 are in the audio output state, the audio output modules 102 appear from both sides of the screen and output audio signals. Compared to the case where only one audio output module 102 is arranged, arrangement of two audio output modules 102 may allow superimposition of audio signals generated by the UE, improving a result of audio signal output.

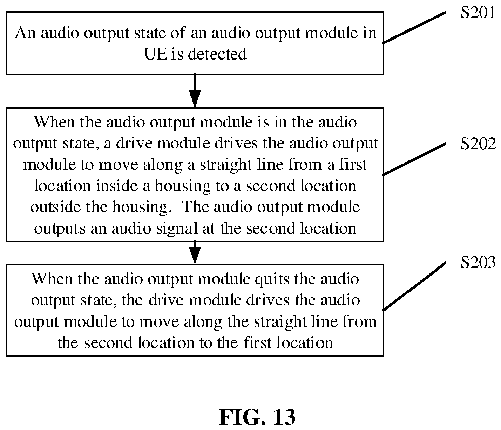

FIG. 13 is a flowchart of a method for outputting audio according to an exemplary embodiment. As shown in FIG. 13, the method include a step as follows.

In S201, an audio output state of an audio output module 102 in UE is detected.

In S202, when the audio output module 102 is in the audio output state, a drive module 103 drives the audio output module 102 to move along a straight line from a first location inside a housing 101 of the UE to a second location outside the housing 101. The audio output module 102 outputs an audio signal at the second location.

In S203, when the audio output module 102 quits the audio output state, the drive module 103 drives the audio output module 102 to move along the straight line from the second location to the first location.

With embodiments herein, compared to hiding an audio output module 102 inside a housing 101, the location of the audio output module 102 is adjusted according to the audio output state of the audio output module 102, such that the audio output module 102 appears outside the housing 101 when outputting an audio signal, reducing blockage of audio output, thereby improving the result of audio output. When no audio signal is to be output, the audio output module 102 is stored inside the housing 101, protecting the audio output module 102 from possible damage due to being left outside the housing 101 of the UE, as well as reducing space occupied by the UE. The audio output module 102 may move along a straight line between inside the housing 101 and outside the housing 101, implementing a smarter design of the audio output module 102, improving user experience.

According to an embodiment, the drive module 103 may drive the audio output module 102 to move along the straight line from the first location inside the housing 101 to the second location outside the housing 101 as follows.

A mobile body 102a of the audio output module 102 may be driven by the drive module 103 to move along the straight line from the first location inside the housing 101 to the second location outside the housing 101 in a direction in which a guide rail 104 fixed on the housing 101 is arranged.

According to an embodiment, the drive module 103 may drive the audio output module 102 to move along the straight line from the second location to the first location as follows.

A mobile body 102a of the audio output module 102 may be driven by the drive module 103 to move along the straight line from the second location to the first location in a direction in which a guide rail 104 fixed on the housing 101 is arranged.

Note that a term such as "first", "second", "third", and "fourth" in embodiments herein merely serves to facilitate expression and differentiation, with no other specific meanings.

According to an aspect herein, a device for outputting audio corresponds to a method for outputting audio herein. The device includes a processor and memory.

The memory is adapted to storing an instruction executable by the processor.

The processor is adapted to implementing the method herein.

Refer to content of the method herein for elaboration of the device herein, which is not repeated here.

According to an aspect herein, a transitory or non-transitory computer-readable storage medium has stored thereon instructions that, when executed by a processor, cause the processor to implement a method herein.

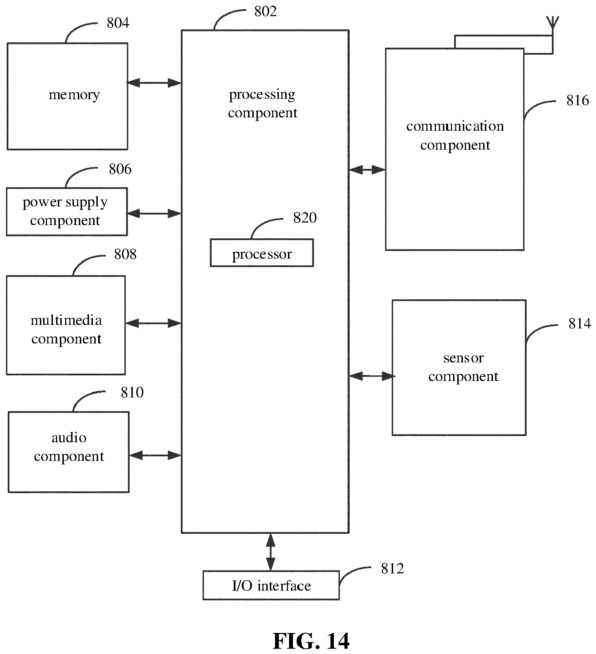

FIG. 14 is a block diagram of UE according to an exemplary embodiment. For example, the UE may be a mobile phone, a computer, digital broadcast UE, message transceiver equipment, a gaming console, tablet equipment, medical equipment, fitness equipment, a Personal Digital Assistant, etc.

Referring to FIG. 14, the UE may include one or more of a processing component 802, memory 804, a power supply component 806, a multimedia component 808, an audio component 810, an Input / Output (I/O) interface 812, a sensor component 814, a communication component 816, etc.

The processing component 802 may generally control an overall operation of the UE, such as operations associated with display, a telephone call, data communication, a camera operation, a recording operation, etc. The processing component 802 may include one or more processors 820 to execute instructions so as to complete all or some steps of the method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 may be adapted to storing various types of data to support the operation at the UE. Examples of such data may include instructions of any application or method adapted to operating on the UE, contact data, phone book data, messages, pictures, videos, etc. The memory 804 may be realized by any type of transitory or non-transitory storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, or a compact disk.

The power supply component 806 may supply electric power to various components of the UE. The power supply component 806 may include a power management system, one or more power sources, and other components related to generating, managing and distributing electricity for the UE.

The multimedia component 808 may include a screen providing an output interface between the UE and a user. The screen may include a Liquid Crystal Display (LCD), a Touch Panel (TP), etc. If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. The multimedia component 808 may include a front camera and/or a rear camera. When the UE is in an operation mode such as a photographing mode or a video mode, the front camera and/or the rear camera may receive external multimedia data. Each of the front camera or the rear camera may be a fixed optical lens system or may have a focal length and be capable of optical zooming.

The audio component 810 may be adapted to outputting and/or inputting an audio signal. For example, the audio component 810 may include a microphone (MIC). When the UE is in an operation mode such as a call mode, a recording mode, and a voice recognition mode, the MIC may be adapted to receiving an external audio signal. The received audio signal may be further stored in the memory 804 or may be sent via the communication component 816. The audio component 810 may further include a loudspeaker adapted to outputting the audio signal.

The I/O interface 812 may provide an interface between the processing component 802 and a peripheral interface module. Such a peripheral interface module may be a keypad, a click wheel, a button, and/or the like. Such a button may include but is not limited to: a homepage button, a volume button, a start button, and a lock button.

The sensor component 814 may include one or more sensors for assessing various states of the UE. For example, the sensor component 814 may detect an on/off state of the UE and relative positioning of components such as the display and the keypad of the UE. The sensor component 814 may further detect a change in the position of the UE or of a component of the UE, whether there is contact between the UE and a user, the orientation or acceleration/deceleration of the UE, a change in the temperature of the UE. The sensor component 814 may include a proximity sensor adapted to detecting existence of a nearby object without physical contact. The sensor component 814 may further include an optical sensor such as a Complementary Metal-Oxide-Semiconductor (CMOS) or a Charge-Coupled-Device (CCD) image sensor used in an imaging application. The sensor component 814 may further include an acceleration sensor, a gyroscope sensor, a magnetic sensor, a distance sensor, a pressure sensor, or a temperature sensor.

The communication component 816 may be adapted to facilitating wired or wireless communication between the UE and other equipment. The UE may access a wireless network based on a communication standard such as Wi-Fi, 2G, 3G, or combination thereof. The communication component 816 may broadcast related information or receive a broadcast signal from an external broadcast management system via a broadcast channel. The communication component 816 may further include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

The UE may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement the method.

In an exemplary embodiment, a transitory or non-transitory computer-readable storage medium including instructions, such as memory 804 including instructions, may be provided. The instructions may be executed by the processor 820 of the UE to implement the method. For example, the computer-readable storage medium may be Read-Only Memory (ROM), Random Access Memory (RAM), Compact Disc Read-Only Memory (CD-ROM), a magnetic tape, a floppy disk, optical data storage equipment, and/or the like.

A transitory or non-transitory computer-readable storage medium has stored thereon instructions. When executed by a processor of a device, the instructions cause the device to perform the method according to embodiments herein.

Herein by "multiple", it may mean two or more. A term "and /or" may describe an association between associated objects, including three possible relationships. For example, by A and /or B, it may mean that there may be three cases, namely, existence of but A, existence of both A and B, or existence of but B. A slash mark "/" may generally denote an "or" relationship between two associated objects that come respectively before and after the mark per se.

Other embodiments of the present disclosure will be apparent to one skilled in the art after he/she has considered the present disclosure and practiced the invention disclosed herein. The subject application is intended to cover any variation, use, or adaptation of the present disclosure following the general principle of the present disclosure and including such departures from the present disclosure as come within known or customary practice in the art. The present disclosure and its embodiments are intended to be exemplary only, with a true scope and spirit of the present disclosure being indicated by the appended claims.

The present disclosure is not limited to the exact construction that has been described above and illustrated in the accompanying drawings. Various modifications and changes can be made without departing from the scope of the present disclosure. It is intended that the scope of the present disclosure be limited only by the appended claims.

## Claims

1. User Equipment, UE, comprising at least a housing (101), an audio output module (102), and a drive module (103) connected to the audio output module (102),
wherein the drive module (103) is adapted to driving the audio output module (102) to move along a straight line between a first location and a second location, the first location being located inside the housing (101), the second location being located outside the housing (101),
wherein the drive module (103) is adapted to, in response to the audio output module (102) being in an audio output state, driving the audio output module (102) to move along the straight line to the second location,
wherein the drive module (103) is adapted to, in response to the audio output module (102) quitting the audio output state, driving the audio output module (102) to move along the straight line to the first location.

2. The UE of claim 1, further comprising a guide rail (104) fixedly installed on the housing (101),
wherein the audio output module (102) comprises a mobile body (102a) and an audio output component (102b) installed on the mobile body (102a),
wherein the mobile body (102a) is arranged on the guide rail (104),
wherein the drive module (103) is connected to the mobile body (102a), wherein the drive module (103) is adapted to driving the mobile body (102a) to move along the straight line between the first location and the second location in a direction in which the guide rail (104) is arranged.

3. The UE of claim 2, wherein the mobile body (102a) comprises a first end and a second end arranged opposite the first end,
wherein the audio output component (102b) comprises a first output sub-component and a second output sub-component,
wherein the first output sub-component is arranged at the first end and / or the second end, wherein the first output sub-component is adapted to outputting an audio signal of a frequency less than a threshold,
wherein the second output sub-component is arranged between the first end and the second end, wherein the second output sub-component is adapted to outputting an audio signal of a frequency greater than the threshold.

4. The UE of claim 2, wherein the mobile body (102a) comprises a first end and a second end arranged opposite the first end,
wherein the audio output component (102b) further comprises a third output sub-component (102b1) and a fourth output sub-component (102b2),
wherein the third output sub-component (102b1) is arranged at the first end and / or the second end,
wherein the fourth output sub-component (102b2) is arranged between the first end and the second end, wherein the third output sub-component(102bl) is greater than the fourth output sub-component (102b2) in terms of size, wherein the third output sub-component (102b1) is greater than the fourth output sub-component (102b2) in terms of maximum output volume.

5. The UE of claim 2, wherein the mobile body (102a) comprises a first region and a second region, wherein the audio output component (102b) is located in the first region,
wherein in response to that the mobile body (102a) moves along the straight line to the first location, both the first region and the second region are located inside the housing (101),
wherein in response to that the mobile body (102a) moves along the straight line to the second location, at least the first region is located outside the housing (101).

6. The UE according to any one of claims 1 to 5, wherein the housing (101) further comprises a first surface and a second surface neighboring the first surface,
wherein the UE further comprises a screen,
wherein the screen is located on the first surface,
wherein the drive module (103) is adapted to driving the audio output module (102) to move along a straight line in a direction in which the second surface is arranged.

7. The UE according to any one of claims 1 to 5, wherein the housing (101) further comprises a first surface and two second surfaces neighboring the first surface,
wherein the UE further comprises a screen,
wherein the screen is located on the first surface,
wherein the audio output module (102) comprises two audio output modules (102) corresponding respectively to the two second surfaces,
wherein the drive module (103) is adapted to driving each of the two audio output modules (102) to move along a straight line in a direction in which a second surface corresponding to the each of the two audio output modules (102) is arranged.

8. A method for outputting audio, comprising:
detecting an audio output state of an audio output module (102) in User Equipment, UE (S201);
in response to the audio output module (102) being in the audio output state, driving, via a drive module (103), the audio output module (102) to move along a straight line from a first location inside a housing (101) to a second location outside the housing (101) (S202);
outputting, via the audio output module (102) at the second location, an audio signal (S202); and
in response to the audio output module (102) quitting the audio output state, driving, via the drive module (103), the audio output module (102) to move along the straight line from the second location to the first location (S203).

9. The method of claim 8, wherein the driving, via the drive module (103), the audio output module (102) to move along the straight line from the first location inside the housing (101) to the second location outside the housing (101) comprises:
driving, via the drive module (103), a mobile body (102a) of the audio output module (102) to move along the straight line from the first location inside the housing (101) to the second location outside the housing (101) in a direction in which a guide rail (104) fixed on the housing (101) is arranged.

10. The method of claim 8, wherein the driving, via the drive module (103), the audio output module (102) to move along the straight line from the second location to the first location comprises:
driving, via the drive module (103), a mobile body (102a) of the audio output module (102) to move along the straight line from the second location to the first location in a direction in which a guide rail (104) fixed on the housing (101) is arranged.

11. A device for outputting audio, comprising a processor (820) and memory (804),
wherein the memory (804) is adapted to storing an instruction executable by the processor (820),
wherein the processor (820) is adapted to implementing the method of claim 8.

12. The device of claim 11, wherein the driving, via the drive module (103), the audio output module (102) to move along the straight line from the first location inside the housing (101) to the second location outside the housing (101) comprises:
driving, via the drive module (103), a mobile body (102a) of the audio output module (102) to move along the straight line from the first location inside the housing (101) to the second location outside the housing (101) in a direction in which a guide rail (104) fixed on the housing (101) is arranged.

13. The device of claim 11, wherein the driving, via the drive module (103), the audio output module (102) to move along the straight line from the second location to the first location comprises:
driving, via the drive module (103), a mobile body (102a) of the audio output module (102) to move along the straight line from the second location to the first location in a direction in which a guide rail (104) fixed on the housing (101) is arranged.

14. A computer program comprising instructions for executing the steps of the method according to any one of claims 8 to 10, when said program is executed by a computer.

15. A recording medium readable by a computer and having recorded thereon a computer program comprising instructions for executing the steps of the method according to any one of claims 8 to 10, when said program is executed by a computer.
